(19) Europäisches Patentamt
European Patent Office
Office européen des brevets

(11) **EP 2 448 110 A2**

(12) **EUROPEAN PATENT APPLICATION**

(43) Date of publication:
**02.05.2012 Bulletin 2012/18**

(51) Int Cl.:
**H02P 21/14** (2006.01)

(21) Application number: **11187102.6**

(22) Date of filing: **28.10.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.10.2010 JP 2010243469**

(71) Applicant: **Hitachi Appliances, Inc.**
**Minato-ku**
**Tokyo (JP)**

(72) Inventors:
• **Kurita, Yoshiaki**
  **Shizuoka, 4240926 (JP)**
• **Ando, Tatsuo**
  **Shizuoka, 4240926 (JP)**
• **Kasahara, Rei**
  **Shizuoka, 4240926 (JP)**
• **Kishita, Ken**
  **Shizuoka, 4240926 (JP)**

(74) Representative: **Beetz & Partner**
**Patentanwälte**
**Steinsdorfstrasse 10**
**80538 München (DE)**

(54) **Refrigerating apparatus and controller for permanent magnet synchronous motor**

(57)     In an identification mode for identifying an inductance setting value L* in vector control operation, an identification mode control unit 21 fixes a rotational speed command $\omega^*$ for a predetermined interval, and a first d-axis current command Idc* at a setting value Idc_at. An inductance identifying unit (23 to 26) averages a difference between a second d-axis current command Idc** and a first d-axis current command Idc* in the identifying mode through integration to calculate a correction $\Delta L^*$ which is added to an inductance setting value to have a corrected inductance setting value L* used in a voltage command computation (45). The identification mode control unit (21) performs the identification mode when the current Ish reaches a plurality of predetermined different values Ish1, and Ish2.

FIG.5

**Description**

BACKGROUND OF THE INVENTION

1. Field of the Invention

The present invention relates to a refrigerating apparatus and a controller for a permanent magnet synchronous motor and particularly, to a refrigerating apparatus including a permanent magnet synchronous motor for driving a compressor for a refrigerating cycle (heat pump cycle) at a rotation speed thereof controlled by a controller and the controller.

2. Description of the Related Art

In refrigerating apparatuses for air conditioners, refrigerators, it is known that a vector control is adopted in an inverter unit for supplying an electric power to the permanent magnet synchronous motor for driving the compressor to provide a high efficiency operation. The vector control, which uses motor constantans (a resistance, an induced voltage, and an inductance), the motor constants should be previously set.

However, the motor constants may vary in accordance with dispersion during manufacturing the motor and an operation condition of the motor, so that deviation of actual values from previously determined setting values may occur.

JP 2007-49843 (US 2007-0035269) discloses a vector controller (inverter unit) which automatically corrects motor constant setting values by identifying the motor constants just before or during actual operation.

The vector controller disclosed in JP 2007-49843 (US 2007-0035269) includes: a current detector for detecting three-phase AC currents, a coordinate converter for converting detection values of the three-phase AC current into a d-axis current detection value and a q-axis current detection value, a d-axis current command computing unit for generating a second d-axis current command in accordance with a deviation of the d-axis current detection value from a first d-axis current command, a q-axis current command computing unit for generating a second q-axis current comment on the basis of a deviation of a q-axis current detection value from a second d-axis current command, a motor constant identifying unit for identifying the motor constants to correct the motor constants.

The vector controller further includes a vector control computing unit for computing a d-axis voltage command and a q-axis voltage command on the basis of the motor constant setting values, a rotation speed command, a second d-axis voltage command and a q-axis voltage command, a coordinate converting unit for converting the d-axis command and the q-axis voltage command into a three-phase AC voltage command, and a power converter to supply voltages in proportional to the three-phase voltage command to a permanent magnet synchronous motor (see Fig. 1, in JP 2007-49843 (US 2007-0035269)).

In a high rotational speed range, the d-axis current is set to either of "zero" or "a value other than zero". A difference in the second d-axes current command between these two control statuses and a difference in the d-axis current detection values between these control statuses are respectively computed. A ratio between the difference in the second d-axes current command between these two control statuses and the difference in the d-axis current detection values between these control conditions is multiplied by a setting value of the d-axis inductance to correct the setting value of the d-axis inductance.

In addition, in the high rotational speed range, when the q-axis current is equal to or higher than "predetermined value", a ratio between the second q-axis current command and the q-axis current detection value (or the first q-axis current command) is multiplied by a setting value of the q-axis inductance to correct the setting value of the q-axis inductance.

An accuracy in identifying the motor constant may affect a control characteristic for the motor (more specifically, a driving efficiency, a response time, a stability, etc.). Particularly, the accuracy in identifying an inductance, which relates to a motor maximum torque control, largely affects a motor current, and the driving efficiency.

A vector control unit (inverter unit) disclosed in US 2007-49843 controls the d-axis current commend to either of "zero" or "the value other than zero". The d-axis inductance is identified on the basis of the difference in the second d-axis current command and the difference in the d-axis current detection values between these two difference control statuses.

Accordingly, because this vector control unit may be easily affected by ripples in current and dispersion in phase, it is desired to be improved in the accuracy in identifying the inductance.

SUMMARY OF THE INVENTION

An aspect of the present invention provides a refrigerating apparatus and a controller for a permanent magnet synchronous motor having an increased accuracy in identifying the inductance and an increased operation efficiency.

An aspect of the present invention provides a refrigerating apparatus comprising:

a compressor (101) for a refrigerating cycle;
a permanent magnet synchronous motor (112) for driving the compressor;
an inverter (200) for controlling the permanent magnet synchronous motor through a vector control at a rotational speed which is variable, wherein the inverter comprises:

an inverter circuit (220) for generating and supplying an AC power from a DC power to the permanent synchronous motor;
a current detecting means (246) for detecting an input DC current or an output AC current of the inverter circuit;
a current detecting and computing means (243) for computing a d-axis current detection value and a q-axis current detection value from the current detected by the current detecting means;
a d-axis current command computing means (44) for generating a second d-axis current command by correcting a first d-axis current command on the basis of a deviation between a first d-axis current command and a d-axis current detection value;
a q-axis current command computing means (42) for generating a second q-axis current command by correcting a first q-axis current command on the basis of a deviation between a first q-axis current command and a q-axis current detection value;
voltage command computing means (45) for computing a d-axis voltage command and a q-axis voltage command on the basis of a motor constant setting value including an inductance setting value for the permanent magnet synchronous motor, a rotational speed command for the motor, the second d-axis current command, and the second q-axis current command;
inverter controlling means (15, 16) for controlling the inverter circuit on the basis of the d-axis voltage command and the q-axis voltage command;
identifying mode controlling means (20) for fixing the rotational speed command as well as the first d-axis current command at a predetermined value for a predetermined time period in an identifying mode for identifying the inductance setting value during a vector control operation in which the first q-axis setting value is set to a value except zero;
inductance identifying means (23, 24, 25, 26) for computing an average value by integrating a difference between the second d-axis current command and the first d-axis current command, a correction quantity of the inductance setting value on the basis of the average value, and a corrected inductance setting value obtained by adding the correction quantity to the inductance setting value and using the corrected inductance setting value in computing in the voltage command computing means, wherein
the identifying mode controlling means performs the identifying mode when the current detected by the current detection means reaches a plurality of different predetermined values.

The present invention can provide a refrigerating apparatus and a controller for a permanent magnet synchronous motor having an increased accuracy in identifying the inductance and an increased operation efficiency.

BRIEF DESCRIPTION OF THE DRAWINGS

The object and features of the present invention will become more readily apparent from the following detailed description taken in conjunction with the accompanying drawings in which:

Fig. 1 is a block diagram of an air conditioner according to an embodiment of the present invention;
Fig. 2 is a schematic circuit diagram of an inverter for controlling a permanent magnet synchronous motor of a compressor according to the embodiment of the present invention;
Fig. 3 is a functional block diagram illustrating functions of a microcomputer in the inverter according the embodiment of the present invention;
Fig. 4 is a functional block diagram of a rotational speed and phase estimating unit shown in Fig. 3;
Fig. 5 is a functional block diagram of a vector control computing unit and a motor constant identifying unit shown in Fig. 3;
Fig. 6 is a chart of a motor rotor axis, a motor maximum torque axis, and an estimation axis of a control system;
Fig. 7 is a time chart indicating an operation of the air conditioner according to the embodiment; and
Fig. 8 is a time chart indicating an operation of the air conditioner according to modification of the present invention.

The same or corresponding elements or parts are designated with like references throughout the drawings.

DETAILED DESCRIPTION OF THE INVENTION

Hereinafter, with reference to drawings will be descried an embodiment of the present invention. In each drawing, common parts are designated with the same references and thus, a duplicated description will be omitted.

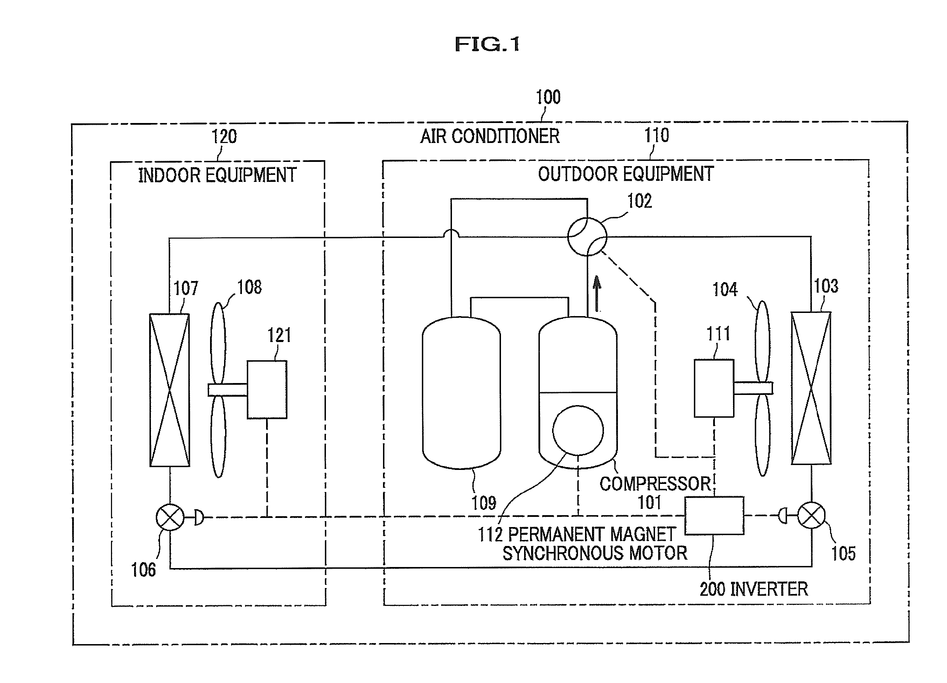

Fig. 1 shows a configuration of an air conditioner (refrigerating unit) 100. The air conditioner 100 includes an outdoor equipment 110 and an indoor equipment 120 to provide a cooling operation and an warming operation as mentioned later.

The outdoor equipment 110 includes a compressor 101, a four-way valve 102, an outdoor heat exchanger 103, an outdoor air blower 104, an outdoor expansion valve 105, an accumulator 109, an outdoor air blower motor 111, a permanent magnet synchronous motor 112, and an inverter 200.

The indoor equipment 120 includes an indoor expansion valve 106, an indoor heat exchanger 107, an indoor air blower 108, and an indoor air blower motor 121.

The four-way valve 102 is switched in the cooling operation to cause the compressor 101 to communicate with the outdoor heat exchanger 103 and the indoor heat exchanger 107 with the accumulator 109 (see Fig. 1). Accordingly, in the air conditioner 100 a refrigerating cycle (heat pump cycle) is formed in which the compressor 101, the outdoor heat exchanger 103, the outdoor expansion valve 105, the indoor expansion valve 106, the indoor heat exchanger 107, and the accumulator 109 are successively connected.

A high-temperature-and-high-pressure coolant compressed by the compressor 101 is condensed by the outdoor heat exchange 103 to be liquefied through heat exchange (heat exhaustion) with the ambient air (outdoor air) and depressurized by the outdoor expansion valve 105 and the indoor expansion valve 106 to become a low-temperature-low-pressure coolant which is easy to be evaporated. The low-temperature-low-pressure coolant evaporates by heat exchanging (absorption of heat) with the air (indoor air in a room in which the indoor equipment 120 is installed) by the indoor heat exchanger 107 and returns to the compressor 101 via the accumulator 109.

The four-way valve 102 is switched in the warming operation to cause the compressor 101 to communicate with the indoor heat exchanger 107 and the outdoor heat exchanger 103 with the accumulator 109 (not shown). Accordingly, in the air conditioner 100 a refrigerating cycle (heat pump cycle) in which the compressor 101, the indoor heat exchanger 107, and the indoor expansion valve 106, the outdoor expansion valve 105, the outdoor heat exchanger 103, and the accumulator 109 are successively connected, is formed.

The high-temperature-high-pressure coolant compressed by the compressor 101 is condensed by the indoor heat exchange 107 to be liquefied through heat exchange (heat exhaustion) with the ambient air (indoor air in the room the indoor equipment 120 is installed) and depressurized by the indoor expansion valve 106 and the outdoor expansion valve 105 to become a low-temperature-low-pressure coolant which is easy to be evaporated. The low-temperature-low-pressure coolant evaporates by heat exchanging (absorption of heat) with the air (outdoor air) by the outdoor heat exchanger 103 and returns to the compressor 101 via the accumulator 109.

The outdoor air blower 104 takes the outdoor air into the outdoor equipment 110 to accelerate heat exchanging with the air (outdoor air) in the outdoor heat exchanger 103. The outdoor air blower 104 is driven by the outdoor air blower motor 111.

The indoor air blower 108 accelerates the heat exchange between the air in the indoor heat exchanger 107 (air in a room where the indoor equipment 120 is installed) and the coolant by introducing the air in the room where the indoor equipment 120 is installed. The indoor air blower 108 is driven by the indoor air blower motor 121.

The compressor 101 is driven by the permanent magnet synchronous motor 112. A rotational speed (operation frequency) of the permanent magnet synchronous motor 112 is variably controlled by the inverter 200. This configuration provides a power necessary for the refrigerating cycle (heat pump cycle) of the air conditioner 100.

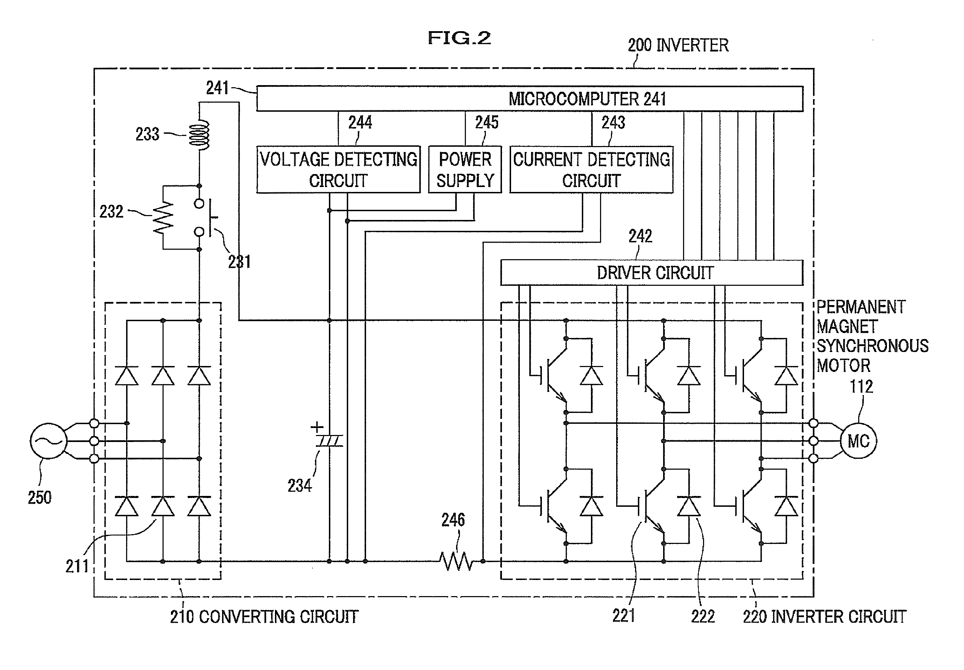

Opening angles of the outdoor expansion valve 105 and the indoor expansion valve 106, rotational speed of the outdoor air blower 104 and the indoor air blower 108, and a status of the four-way valve 102 for switching between cooling/warming operation modes are controlled by a microcomputer 241 (see Fig. 2) of the inverter 200.

«Inverter 200»

Fig. 2 is a schematic circuit diagram of the inverter 200 for controlling the permanent magnet synchronous motor 112 of the compressor 101. The inverter 200 shown in Fig. 2 controls the permanent magnet synchronous motor 112. In the embodiment, the inverter 200 (the microcomputer 241) controls the four-way valve 102, the outdoor air blower 104, the outdoor expansion valve 105, the indoor expansion valve 106, the indoor air blower 108, etc. (see Fig. 1) in addition to controlling the rotational speed of the permanent magnet synchronous motor 112 for driving the compressor 101. However, a detailed description will be omitted.

The inverter 200 includes a converting circuit 210, an inverter circuit 220, a contactor 231, a rush current limiting resistor 232, a driver circuit 242, a current detecting circuit 243, a voltage detecting circuit 244, a power supply 245, and a shunt resistor 246.

The converting circuit 210 converts an AC power supplied by an AC power source 250 into a DC (direct current) power and supplies to the inverter circuit 220. More specifically, the converting circuit 210 has a circuit of a plurality of rectifying elements 211 which are connected to have a bridge connection to convert the AC power from the AC power source 250 into the DC power.

The inverter circuit 220 converts the DC power supplied from the converting circuit 210 into an AC power which is supplied to the permanent magnet synchronous motor 112. More specifically, the inverter circuit 220 has a circuit of a plurality of switching elements 221 to have a three-phase bridge connection. The switching elements 221 has a flywheel element 222 connected in parallel to the microcomputer 241 to regenerate a counter electromotive force generated on switching of the microcomputer 221.

A circuit including an electromagnetic contactor 231, a reactor 233 for power factor improvement, and a smoothing capacitor 234 is connected between the converting circuit 210 and the inverter circuit 220. In addition, a rush current limiting resistor 232 is connected in parallel to the electromagnetic contactor 231 to prevent the electromagnetic contactor 231 from being welded due to an excessive rush current flowing through the smoothing capacitor 234 which is made close on power-on, etc.

The microcomputer 241 controls the inverter circuit 220 through a driver circuit 242.

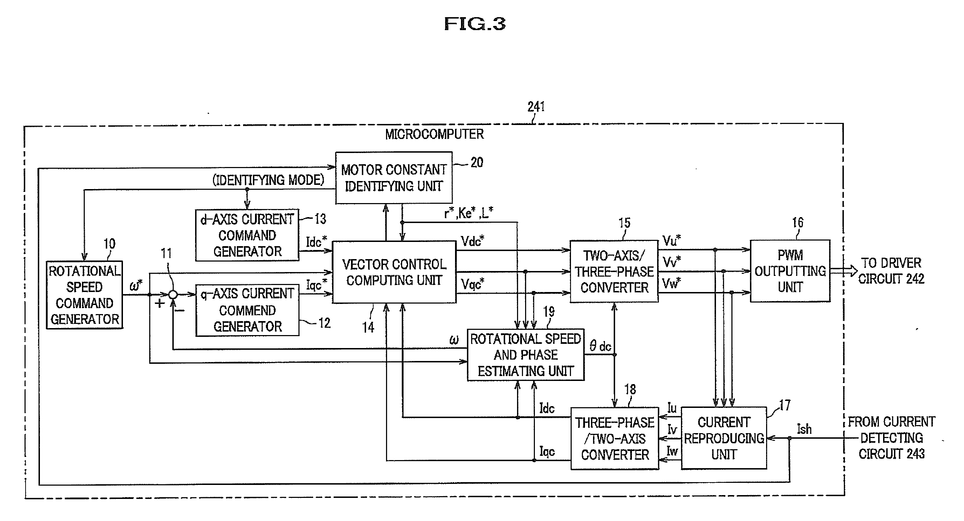

The driver circuit 242 amplifies low intensity signals from the microcomputer 241 (PWM (Pulse Width Modulation) signals) generated by a PWM outputting circuit 16 shown in Fig. 3 described later). Accordingly, the inverter circuit 220 generates the AC power and controls a frequency of the AC power.

The current detecting circuit 243 detects an input DC current of the inverter circuit 220 with a shunt resistor 246. A current value (DC current Ish shown in Fig. 3 described later) detected by the current detecting circuit 243 is transmitted to the microcomputer 241.

A voltage detecting circuit 244 detects an output DC current of the converting circuit 210. The voltage detected by the voltage detecting circuit 244 is transmitted to the microcomputer 241.

A power supply circuit 245 controls to generate a power of, for example, about 5 V or 15 V from a high voltage generated by the converting circuit 210 to supply the voltage to the microcomputer 241 and the driver circuit (inverter control means) 242.

«Microcomputer 241»

As shown in Fig. 2, the microcomputer 241 has a sensor-less type of vector control function. More specifically, because the microcomputer 241 can reproduce the input DC current of the inverter circuit 220 (the DC current Ish shown in Fig. 3 described later) detected by the current detecting circuit 243. This eliminates the necessity of current sensors for detecting an AC current. In addition, the microcomputer 241 estimates the rotational speed and phase (magnetic pole position) of the permanent magnet synchronous motor 112. This eliminates the necessity of a rotational speed sensor or a magnetic pole position sensor. Next, will be described a detail of such a vector control.

Fig. 3 is a functional block diagram illustrating functional configuration in the microcomputer 241. The microcomputer 241 includes a rotational speed command generator 10, a subtracter 11, a q-axis current commend generator 12, a d-axis current command generator 13, a vector control computing unit 14, a two-axis/three-phase converter (inverter control means) 15, a PWM outputting unit (inverter control means) 16, a current reproducing unit (current detecting means) 17, a three-phase/two-axis converter 18, a rotational speed and phase estimating unit 19, and a motor constant identifying unit 20.

<Current Reproducing Unit 17>

The current reproducing unit 17 estimates drive currents (detection current values Iu, Iv, Iw of three-phase AC) on the basis of the DC current (input DC current) Ish detected by the current detecting circuit (current detecting means) 243 (see Fig. 2) and three-phase AC voltage command values Vu*, Vv*, Vw* computed by the two-axis/three-phase converter 15. The detection current values Iu, Iv, Iw of three-phase AC estimated by the current reproducing unit 17 are supplied to the three-phase/two-axis converter 18. Thus, the microcomputer 241 has the current reproducing unit 17 and reproduces (estimate) the drive currents of the permanent magnet synchronous motor 112. Accordingly, the inverter 200 eliminates the necessity of the current sensor for detecting AC currents.

<Thee-Phase/Two-Axis Converter 18>

The three-phase/two-axis converter 18 converts Iu, Iv, Iw into a dc-axis current detection value Idc and a qc-axis current detection value Iqc which are estimated by the current reproducing unit 17 on the basis of the phase detection value θdc estimated by the rotational speed and phase estimating unit 19. A transformation for converting the current detection values Iu, Iv, Iw of three-phase AC current into the dc-axis current detection value Idc and the qc-axis current detection value Iqc are given by Eqs. (1) and (2).

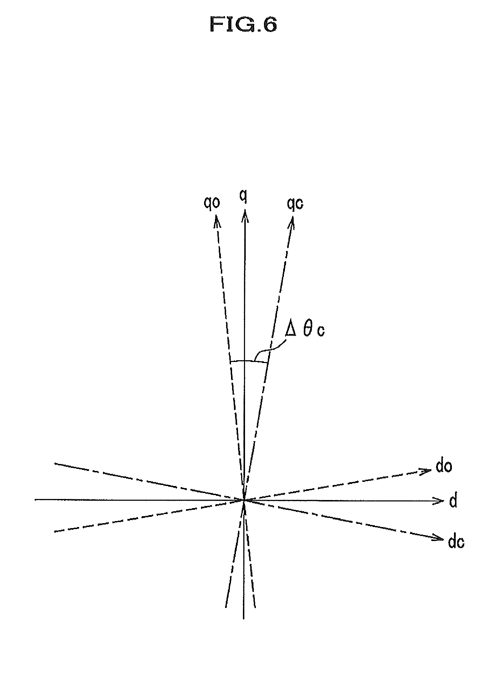

As shown in Fig. 6, a d-q axis is a motor rotor axis, a do-qo axis is a motor maximum torque axis, and a dc-qc axis is an estimation axis of a control system. In addition, an axis error between the do-qo axis (motor maximum torque axis) and the dc-qc axis (estimation axis of the control system) is defined as Δθc.

$$\begin{pmatrix} I\alpha \\ I\beta \end{pmatrix} = \frac{2}{3} \begin{pmatrix} \cos(0) & \cos(2\pi/3) & \cos(4\pi/3) \\ \sin(0) & \sin(2\pi/3) & \sin(4\pi/3) \end{pmatrix} \begin{pmatrix} Iu \\ Iv \\ Iw \end{pmatrix} \qquad \cdots \quad (1)$$

$$\begin{pmatrix} Idc \\ Iqc \end{pmatrix} = \begin{pmatrix} \cos(\theta dc) & -\sin(\theta dc) \\ \sin(\theta dc) & \cos(\theta dc) \end{pmatrix} \begin{pmatrix} I\alpha \\ I\beta \end{pmatrix} \qquad \cdots \quad (2)$$

The dc-axis current detection value Idc and the q-c axis current detection value Iqc converted by the three-phase/two-axis converter 18 is supplied to the vector control computing unit 14 and the rotational speed and phase estimating unit 19.

<Rotational Speed and Phase Estimating Unit 19>

The rotational speed and phase estimating unit 19 estimates a rotational speed detection value ω which is a rotational speed of the permanent magnet synchronous motor 112 and a phase detection value θdc which is a phase (magnetic pole position) of the permanent magnet synchronous motor 112 on the basis of the dc-axis current detection value Idc and the qc-axis current detection value Iqc converted by the three-phase/two-axis converter 18, the rotational speed command value ω* generated by the rotational speed command generator 10, the dc-axis voltage command value Vdc* and the qc-axis voltage command value Vqc* computed by the vector control computing unit 14, a motor constant setting value (a resistance setting value r*, an induced voltage setting value Ke*, a virtual inductance setting value L*) identified by the motor constant identifying unit 20.

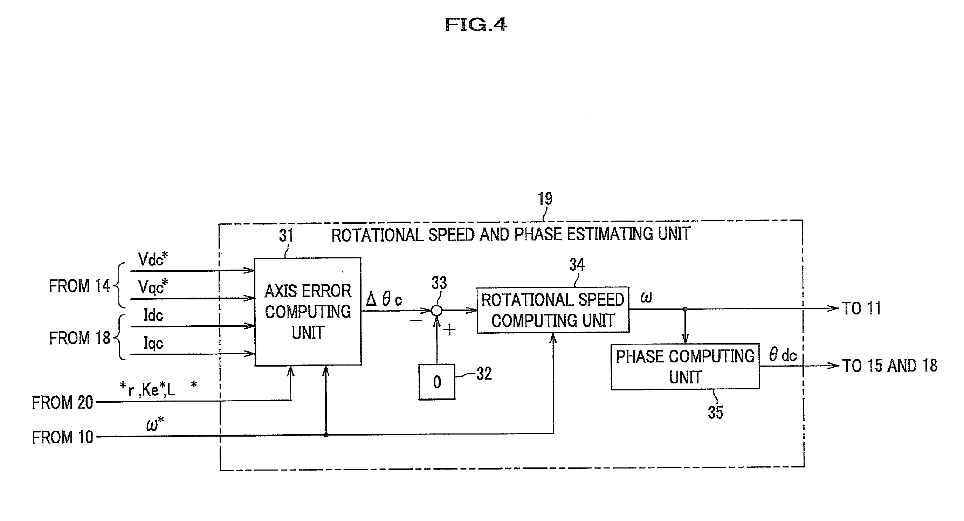

Fig. 4 is an illustration of a functional block diagram of the rotational speed and phase estimating unit 19.

The rotational speed and phase estimating unit 19 includes an axis error computing unit 31 for computing the axis error Δθc (see Fig. 6), a zero generating unit 32 for supplying a zero command to the axis error Δθc, a subtracter 33, a rotational speed computing unit 34 for estimating the rotational speed detection value ω, and a phase computing unit 35 for estimating the phase detection value θdc.

The axis error computing unit 31 computes the axis error Δθc on the basis of the dc-axis voltage command value Vdc*, a qc-axis voltage command value Vqc*, the dc-axis current detection value Idc, the qc-axis current detection value Iqc, the motor constant setting value (the resistance setting value r*, the induced voltage setting value Ke*, the virtual inductance setting value L*), and the rotational speed command value ω*. The axis error Δθc is given in Eq. (3). The axis error Δθc computed by the axis error computing unit 31 is supplied to the subtracter 33.

$$\Delta\theta c = \tan^{-1}\left\{ (V'_{dc} - r'I_{dc} + \omega'L'I_{qc}) \big/ (V'_{qc} - r'I_{qc} - \omega'L'I_{dc}) \right\} \qquad \cdots \quad (3)$$

The zero generating unit 32 generates and supplies the zero command (value of zero) to the subtracter 33.

The subtracter 33 subtracts the axis error Δθc computed by the axis error computing unit 31 from the zero command (value of zero) generated by the zero generating unit 32. The difference value computed by the subtracter 33 is supplied to the rotational speed computing unit 34.

The rotational speed computing unit 34 estimates the rotational speed detection value ω to make zero the axis error Δθc computed by the axis error computing unit 31 (a difference between the value of zero and the axis error Δθ, i.e., an absolute value of the axis error Δθc). In other words, the zero generating unit 32, the subtracter 33, and the rotational speed computing unit 34 form a PLL (Phase locked Loop) control circuit.

For example, when the axis error Δθc is positive, because the dc-qc axis which is an estimation axis of the control system advances relative to a do-qo axis which is a motor maximum torque axis, the rotational speed computing unit 34 estimates so as to increase the rotational speed detection value ω.

On the other hand, when the axis error Δθc is negative, because the dc-qc axis which is an estimation axis of the control system delays relatively to a do-qo axis which is the motor maximum torque axis, the rotational speed computing unit 34 estimates so as to decrease the rotational speed detection value ω.

The phase computing unit 35 integrates the rotational speed detection value estimated by the rotational speed computing unit 34 to compute the phase detection value θdc which is a phase of the control system.

Next, as shown in Fig. 3, the rotational speed detection value ω estimated by the rotational speed and phase estimating unit 19 (the rotational speed computing unit 34) is supplied to the subtracter 11. In addition, the phase detection value θdc estimated by the rotational speed and phase estimating unit 19 (the phase computing unit 35) is supplied to the two-axis/three-phase converter 15 and the three-phase/two-axis converter 18. As described above, the microcomputer 241 has the rotational speed and phase estimating unit 19 to estimate the rotational speed and the phase (magnetic pole position) of the permanent magnet synchronous motor 112. Accordingly, the inverter 200 does not need any rotational speed sensor and magnetic pole position sensor.

Returning to Fig. 3, will be described each part of the microcomputer 241 again.

<Rotational Speed Command Generator 10>

The rotational speed command generator 10 generates a rotational speed commend ω* which is a command of the rotational speed of the permanent magnet synchronous motor 112 (see Fig. 2). The rotational speed command ω* generated by the rotational speed command generator 10 is supplied to the subtracter 11, the vector control computing unit 14, and the rotational speed and phase estimating unit 19.

An operation of the rotational speed command generator 10 when the rotational speed command generator 10 receives a signal indicating "identifying mode" from the motor constant identifying unit 20 will be described later.

<Subtracter 11>

The subtracter 11 subtracts the rotational speed detection value ω estimated by the rotational speed and phase estimating unit 19 from the rotational speed command ω* generated by the rotational speed command generator 10. The difference value (deviation value) operated by the subtracter 11 is supplied to the q-axis current commend generator 12.

<q-axis Current Commend Generator 12>

The q-axis current commend generator 12 generates a first qc-axis current command Iqc* so as to make a deviation between the rotational command ω* and the rotational speed detection value ω (so as to decrease an absolute value of the deviation) zero. The first qc-axis command Iqc* generated by the q-axis current commend generator 12 is supplied to the vector control computing unit 14.

<d-axis Current Command Generator 13>

The d-axis current command generator 13 generates a first dc-axis current command Idc*. The dc-axis current command Idc* generated by the d-axis current command generator 13 is supplied to the vector control computing unit 14.

An operation of the d-axis current command generator 13 when the d-axis current command generator 13 receives a signal indicating "identifying mode" for the rotational speed command generator 10 will be described later.

<Vector Control Computing Unit 14>

The vector control computing unit 14 computes the dc-axis voltage command Vdc* and the qc-axis voltage command Vqc* which are two-axis voltage command for the permanent magnet synchronous motor 112 (see Fig. 2) on the basis of the rotational speed command ω* generated by the rotational speed command generator 10, the first dc-current command Iqc* generated by the q-axis current command generator 12, the first dc-axis current command Idc* generated by the d-axis current command generator 13, the dc-axis current detection value Idc and the qc-axis current detections value Iqc converted by the three-phase/two-axis converter 18, and the motor constant setting value (resistance setting value r*, induced voltage setting value Ke*, the virtual inductance setting value L*).

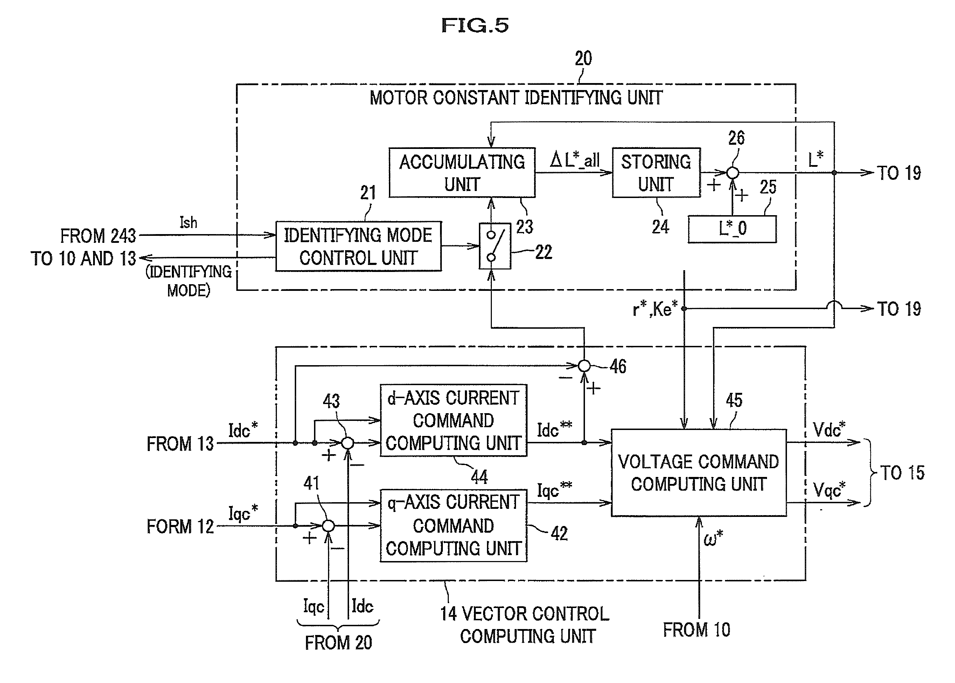

Fig. 5 is a functional block diagram of the vector control computing unit 14 and the motor constant identifying unit 20. In Fig. 5, the motor constant identifying unit 20 is also shown in Fig. 5 in addition to the vector control computing unit 14. Here, only the vector control computing unit 14 will be described, and the motor constant identifying unit 20 will be described later.

The vector control computing unit 14 includes a subtracter 41, a q-axis current command computing unit (q-axis current command computing means) 42, a subtracter 43, a d-axis current command computing unit (d-axis current command computing means) 44, and a voltage command computing unit 45.

The subtracter 41 subtracts the qc-axis current detection value Iqc from the first qc-axis current command value Iqc*. The q-axis current command computing unit 42 corrects the first qc-axis current command Iqc* on the basis of a difference between the first qc-axis current command Iqc* and the qc-axis current detection value Iqc to generate a second qc-axis current command Iqc**.

Similarly, the subtracter 43 subtracts the dc-axis current detection value Idc from the first dc-axis current command Idc*. The d-axis current command computing unit 44 corrects the first dc-axis current command Idc* on the basis of a difference between the first dc-axis current command Idc* and the dc-axis current detection value Idc to generate a second dc-axis current command Idc**.

The voltage command computing unit (voltage command computing means) 45 computes the dc-axis voltage command Vdc* and a qc-axis voltage command Vqc* on the basis of the second qc-axis current command Iqc**, a second dc-axis current command Idc**, the motor constant setting value (the resistance setting value r*, induced voltage setting value Ke*, the virtual inductance setting value L*), and the rotational speed command ω *. Formulas of the dc-axis voltage command Vdc* and the qc-axis voltage command Vqc* are given in Eqs. (4) and (5). In Eqs. (4) and (5), in this embodiment, it is assumed that a d-axis virtual inductance setting value Ld* of the permanent magnet synchronous motor 112 (see Fig. 2) is substantially equal to the q-axis virtual inductance setting value Lq*, and this value is set as the virtual inductance setting value L* (=Ld*=Lq*).

$$\begin{cases} V_{dc}' = r^* I_{dc}^{**} - \omega^* L^* I_{qc}^{**} & \cdots (4) \\ V_{qc}' = r^* I_{qc}^{**} + \omega^* L^* I_{dc}^{**} + \omega^* Ke^* & \cdots (5) \end{cases}$$

As shown in Fig. 3, the dc-axis voltage command Vdc* and the qc-axis voltage command Vqc* are supplied to the two-axis/three-phase converter 15 and the rotational speed and phase estimating unit 19.

In addition, as shown in Fig. 5, the vector control computing unit 14 includes a subtracter 46. The subtracter 46 subtracts the first dc-axis current command Idc* from the second dc-axis current command Idc**. The difference computed by the subtracter 46 is supplied to the motor constant identifying unit 20.

Returning to Fig. 3, will be described each part of the microcomputer 241 again.

<Two-Axis/Three-Phase Converter 15>

The two-axis/three-phase converter 15 converts the dc-axis current command Vdc* and the qc-axis voltage command Vqc* into voltage commands Vu*, Vv*, Vw* of a three-phase AC voltage commands on the basis of the phase detection value θdc estimated by the rotational speed and phase estimating unit 19. A transfer formation for converting the dc-axis voltage command Vdc* and the qc-axis voltage command Vqc* into the three-phase AC voltage commands Vu*, Vv*, Vw*. The three-phase AC voltage commands Vu*, Vv*, Vw* converted by the two-axis/three-phase converter 15 are supplied to the PWM outputting unit 16.

$$\begin{pmatrix} V_\alpha \\ V_\beta \end{pmatrix} = \begin{pmatrix} \sin(\theta dc) & \cos(\theta dc) \\ -\cos(\theta dc) & \sin(\theta dc) \end{pmatrix} \begin{pmatrix} V_{dc}^* \\ V_{qc}^* \end{pmatrix} \qquad \cdots (6)$$

$$\begin{pmatrix} V_u^* \\ V_v^* \\ V_w^* \end{pmatrix} = \begin{pmatrix} \cos(0) & \sin(0) \\ \cos(2\pi/3) & \sin(2\pi/3) \\ \cos(4\pi/3) & \sin(4\pi/3) \end{pmatrix} \begin{pmatrix} V_\alpha \\ V_\beta \end{pmatrix} \qquad \cdots (7)$$

< PWM Outputting Unit 16>

The PWM outputting unit 16 generates PWM (Pulse Width Modulation) signals which are respectively proportional to voltage command values Vu*, Vv*, Vw* of three-phase AC converted by the two-axis/three-phase converter 15 and supplies the PWM signals to the driver circuit 242 (see Fig. 2).

As described above, the microcomputer 241 estimates the rotational speed detection value ω which is the rotational speed of the permanent magnet synchronous motor 112 on the basis of the DC current Ish detected by the current detecting circuit 243 (see the rotational speed and phase estimating unit 19) and generates and supplies the PWM signals to the driver circuit 242 (see Fig. 2) to control the estimated rotational speed detection value ω to be equal to the rotational speed command ω* generated by the rotational speed command generator 10 for the permanent magnet synchronous motor 112 (see Fig. 2).

Repeating this control provides control of the rotational speed of the permanent magnet synchronous motor 112 (see Fig. 2) toward the rotational speed command ω* generated by the rotational speed command generator 10 of the microcomputer 241.

<Motor Constant Identifying Unit 20>

As shown in Fig. 3, the motor constant identifying unit 20 supplies the motor constant setting values (the resistance setting value r*, the induced voltage setting value Ke*, the virtual inductance setting value L*) to the vector control computing unit 14 and the rotational speed and phase estimating unit 19.

The motor constant identifying unit 20 identifies the motor constants (the resistance setting value r*, the induced voltage setting value Ke*, the virtual inductance setting value L*) and corrects the motor constant setting values (the resistance setting value r*, the induced voltage setting value Ke*, the virtual inductance setting value L*). During identifying the motor constants, the motor constant identifying unit 20 transmits "identifying mode signal" indicating that the current mode is in the identifying mode for identifying the motor constants to the rotational speed command generator 10 and the d-axis current command generator 13.

<Identifying Method of Virtual inductance L)

First, will be described a method of identifying the virtual inductance L.

In a steady status, the current detection values Idc, Iqc (or first current command Idc*, Iqc*) becomes substantially equal to the second current commands Idc**,Iqc** when the motor constant setting values (the resistance setting value r*, induced voltage setting value Ke*, the virtual inductance setting value L*) match to the actual motor constants (the resistance setting value r, induced voltage setting value Ke, the virtual inductance setting value L).

However, in the steady condition, when the motor constant setting values (the resistance setting value r*, the induced voltage setting value Ke*, the virtual inductance setting value L*) deviates from the actual motor constants (the resistance setting value r, the induced voltage setting value Ke, the virtual inductance setting value L), a deviation occurs between the current detection values Idc, Iqc (or the first current commands Idc*, Iqc*) and the second current commands Idc**, Iqc**.

A relationship between the current detection values Idc, Iqc and the voltage command Vdc*, Vqc* is approximately given in Eqs. (8) and (9).

$$\begin{cases} V_{dc}^{'} = rI_{dc} - \omega L I_{qc} & \cdots (8) \\ V_{qc}^{'} = rI_{qc} + \omega L I_{dc} + \omega Ke & \cdots (9) \end{cases}$$

In the steady status, the rotational speed command ω* is substantially equal to the rotational speed detection value ω, and the first dc-axis current command Idc* is substantially equal to the dc-axis current detection value Idc. When the permanent magnet synchronous motor 112 rotates at an intermediate or high speed, or when an error in the resistance setting value r*, if it is assumed that (r*=r), the following Eq. (10) can be given from the Eq. (4), (5), and (8),(9).

$$L^{'} I_{dc}^{**} + Ke^{*} = L I_{dc} + Ke \qquad \cdots (10)$$

When this equation is modified, the following Eq. (11) is given. In the steady status, because the first dc-axis current command Idc* is substantially equal to the dc-axis current detection value Idc, it is assumed that Idc = Idc*.

$$I_{dc}^{**} = \frac{L}{L^*} I_{dc}^* + \frac{Ke - Ke^*}{L^*} \qquad \cdots (1 1)$$

In addition, if it is assumed that after completion of the identification of the induced voltage Ke, i.e., Ke*=Ke, a predetermined setting value Idc*_at is given as the first dc-axis current command Idc*, Eq. (12) for obtaining an error ΔL* of the virtual inductance setting value L* can be introduced with Eq. (11).

$$\Delta L = L - L^* = \frac{I_{dc}^{**} - I_{dc\_at}^*}{I_{dc\_at}^*} L^* \qquad \cdots (1 2)$$

<Functional Configuration of Motor Constant Identifying Unit 20>

Next, with reference to Fig. 5, will be described a function configuration of the motor constant identifying unit 20. The motor constant identifying unit 20 includes to identify the above-described virtual inductance L, an identifying mode control unit (identifying mode control means) 21, an input switching unit 22, an accumulating unit (inductance identifying means) 23, a storing unit (inductance identifying means) 24, an initial value storing unit (inductance identifying means) 25, and an adder (inductance identifying means) 26. Descriptions of the functions of identifying the resistance r and the induced voltage setting value Ke and correcting the resistance setting value r*, and the induced voltage setting value Ke* will be omitted.

The identifying mode control unit 21 inputs the DC current Ish detected by, for example, the current detecting circuit 243 (see Fig. 2) during the vector control operation of the permanent magnet synchronous motor 112 and determines whether the DC current Ish reaches a predetermined value Ish1.

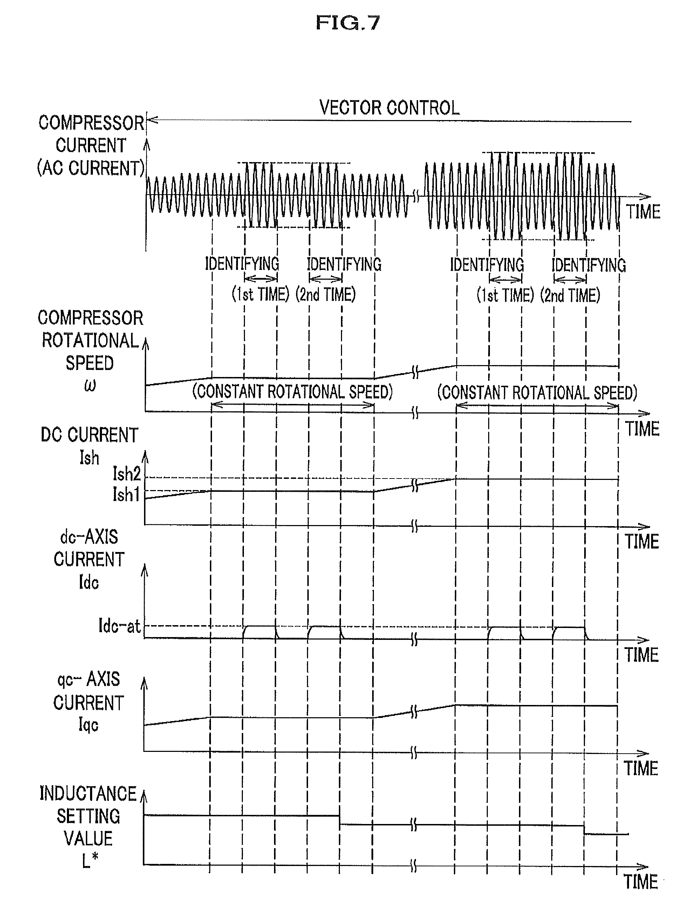

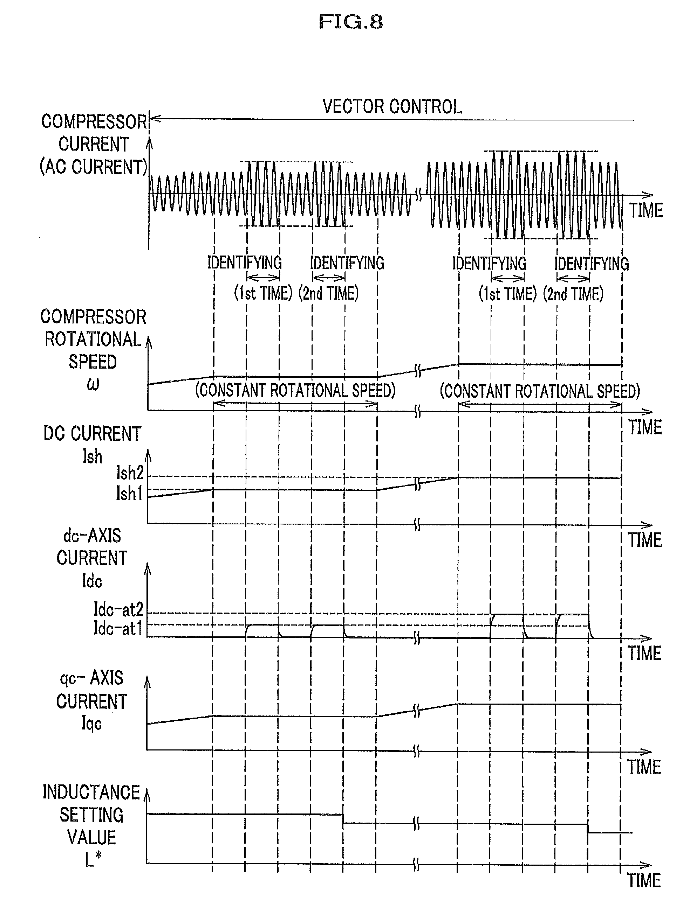

When the DC current Ish reaches the predetermined value Ish1, i.e., when the DC current Ish increases or decreased to the predetermined value Ish1, the identifying mode control unit 21 determines this situation as "identifying mode" and instructs the rotational speed command generator 10 (see Fig. 3) and the d-axis current command generator 13 (see Fig. 3) as well as switch the input switching unit 22 into a connection status. In this embodiment, the identifying mode is repeated a predetermined times (for example twice (see Figs. 7 and 8).

The rotational speed command generator 10 (see Fig. 3) fixes the rotational speed command value ω* as a current value (current rotational speed detection value ω) in accordance with the command of the identifying mode.

In addition, the d-axis current command generator 13 (see Fig. 3) fixes the first dc-axis current command Idc* at a predetermined setting value Idc*_at in accordance with the command of the identifying mode. The predetermined setting value Idc*_at is preferably set to be relatively smaller to avoid affection by an inverter eddy current and motor magnetic saturation. In addition, to consider an operation error in a current detection resolution of the current detecting circuit 243 (see Fig. 2) and each part (see Fig. 3) of the microcomputer 241 and secure an accuracy in identifying the virtual inductance L, for example, it is preferable to set the predetermined setting value Idc*_at in a range of about one tenth to half of a rated current of the permanent magnet synchronous motor 112 (see Fig. 2).

The input switching unit 22 is switched into a connection status by the identifying mode control unit 21 and then supplies a difference value between the second dc-axis current command Idc** calculated by the subtracter 46 of the vector control computing unit 14 and the first dc-axis current command Idc* to the accumulating unit 23.In the identifying mode, the first dc-axis current command Idc* is fixed at a predetermined setting value Idc*_at.

The difference value (Idc**-Idc*_at) between the second dc-axis current command Idc** and the first dc-axis current command Idc* during the identifying mode period is inputted into the accumulating unit 23 which computes an average value through integrating the difference value Idc**-Idc*_at during the identifying mode period.

The accumulating unit 23 computes an error ΔL* of the virtual inductance setting value L* with the above-described Eq. (12). To suppresses affection by a current ripple or dispersion in phase, it is preferable to set a time constant so that a response of the accumulating unit 23 is set to be slower than a control response of the vector control computing unit 14.

When an error of ΔL*_1,···, Δ L*_n is obtained by performing the identifying mode n times, the accumulating unit 23 stores a total of ΔL*_all(=ΔL*_1+···+ Δ L*_n) in the storing unit 24.

The adder 26 adds the error ΔL*_all stored in the storing unit 24 to a virtual inductance initial setting value L*_0 stored in the initial value storing unit 25 and supplies the result as a virtual inductance setting value L*(=L*_0+ΔL*_all) to the voltage command computing unit 45 and the rotational speed and phase estimating unit 19 in the vector control computing unit 14.

<<Operation of Inverter 200 Controlling Permanent Magnet Synchronous Motor 112>>

Fig. 7 is a time chart indicating an operation of the air conditioner according to the embodiment.
The inverter 200 (see Fig. 2) drives the permanent magnet synchronous motor 112 (see Fig. 2) through the vector control.
When the input DC current (DC current Ish) of the inverter circuit 220 detected by the current detecting circuit 243 (see Fig. 2) reaches the first predetermined setting value Ish1, i.e., when the status is determined as "identifying mode", the rotation speed ω* is fixed, and the first dc-axis current command Idc* at a predetermined setting value Idc*_at.
Next, a difference (Idc**-Idc*_at) between the second dc-axis current command Idc** and the first dc-axis current command Idc* (predetermined setting value Idc*_at) during the identifying mode is integrated to compute an average value, and a correction quantity (error) ΔL* for the virtual inductance setting value L* is computed on the basis of the average.
After that, the vector control operation is carried out by using a virtual inductance setting value L* to which the correction quantity ΔL* is added.
After continuing the operation for a predetermined period, when the DC current Ish reaches the second predetermined setting value Ish 2, i.e., when the mode is determined as the identifying mode, for a predetermined period, the first dc-axis current command Idc* is fixed at the predetermined setting value Idc*_at while the rotational speed command value ω* is fixed. Similarly, the correction quantity (error) ΔL* for the virtual inductance setting value L* is computed and the vector control operation is performed with the virtual inductance setting value L* to which the correction quantity (error) ΔL* is added.
This embodiment provides a high accuracy in identifying the virtual inductance L of the permanent magnet synchronous motor 112 in which affection by the ripple in the current and dispersion in phase are suppressed.
In addition, the accuracy of identifying of the virtual inductance L can be provided by performing the "identifying mode" at different predetermined setting values (Ish1, Ish2) in accordance with an input DC current (DC current Ish) of the inverter circuit 220 and repeating a predetermined times (twice in Fig. 7).
Increase in the accuracy in identifying of the virtual inductance L provides a more preferable control of the permanent magnet synchronous motor 112, which improves an operation efficiency of the air conditioner (refrigerating apparatus) 100,

«Modification»

The air conditioner according to this embodiment is not limited to the above-described embodiment and can be modified without departure of the sprit of the invention.
In Fig. 7, as described above, when the input DC current (DC current Ish) of the inverter circuit 220 (see Fig. 29 detected by the current detecting circuit 243 (see Fig. 2) reaches a plurality of setting values (Ish1, Ish2) previously set, the "identification mode" is performed to fix the first dc-axis current command Idc* at a predetermined setting value Idc*_at. However, because the virtual inductance L has a current-dependency, as shown in Fig. 8, it is also possible to fix the first dc-axis current command Idc* for each setting values (Ish1, Ish2) at one of different predetermined setting values (Idc*_at1 Idc*_at2). This case also provides a similar advantageous effect.
In addition, the "identifying mode" may not be performed if a predetermined time period has not expired after a previous identification of the virtual inductance L though the input DC current (DC current Ish) of the inverter circuit 220 (see Fig. 2) reaches the predetermined setting value Ish1 (Ish2).
This prevents a time period for controlling the rotational speed of the permanent magnet synchronous motor 112 (see Fig. 2) to the rotational speed command ω* from elongating because the "identifying mode" which is frequently performed while the rotational speed of the permanent magnet synchronous motor 112 is fixed.
In addition, as described above, in the embodiment, the DC current (DC current Ish) reaches the setting value Ish1 (Ish2). However, the "identification mode" may be performed when the rotational speed detection value ω reaches a predetermined setting rotational speed with the rotational speed detection value ω of the permanent magnet synchronous motor 112 (see Fig. 2) estimated by the rotational speed and phase estimating unit 19 (see Fig. 3).
In addition, as described above, in the embodiment, the microcomputer 241 has a vector control function of a sensor-less type. However, the vector control may be performed for controlling the permanent magnet synchronous motor 112 (see Fig. 2) using a current sensor installed for detecting a drive current (output AC current of the inverter circuit 220) or a rotational speed sensor installed for detecting the rotational speed of the permanent magnet synchronous motor 112, or a magnetic pole position sensor for detecting a phase (magnetic pole position) of the permanent magnet synchronous motor 112 (see Fig. 2).
In addition, the control unit (the inverter 200) of the permanent magnet synchronous motor 112 is not limited to the control for the compressor of the refrigerating cycle provided in a refrigerating apparatus (the air conditioner 100 in the cooling operation), but may be used for controlling a compressor for a heat pump cycle provided in a heating apparatus (the air conditioner 100 in warming operation). The above embodiments of the invention as well as the appended claims and figures show multiple characterizing features of the invention in specific combinations. The skilled person will easily be able to consider further combinations or sub-combinations of these features in order to adapt the invention as defined in the in the claims to his specific needs.

**Claims**

1. A refrigerating apparatus comprising:

   a compressor (101) for a refrigerating cycle;
   a permanent magnet synchronous motor (112) for driving the compressor; and
   an inverter (200) for controlling the permanent magnet synchronous motor through a vector control at a rotational speed which is variable, wherein the inverter comprises:

   an inverter circuit (220) for generating and supplying an AC power from a DC power to the permanent synchronous motor;
   a current detecting means (246) for detecting an input DC current or an output AC current of the inverter circuit;
   a current detecting and computing means (243) for computing a d-axis current detection value and a q-axis current detection value from the current detected by the current detecting means;
   a d-axis current command computing means (44) for generating a second d-axis current command by correcting a first d-axis current command on the basis of a deviation between a first d-axis current command and a d-axis current detection value;
   a q-axis current command computing means (42) for generating a second q-axis current command by correcting a first q-axis current command on the basis of a deviation between a first q-axis current command and a q-axis current detection value;
   voltage command computing means (45) for computing a d-axis voltage command and a q-axis voltage command on the basis of a motor constant setting value including an inductance setting value for the permanent magnet synchronous motor, a rotational speed command for the motor, the second d-axis current command, and the second q-axis current command;
   inverter controlling means (15, 16) for controlling the inverter circuit on the basis of the d-axis voltage command and the q-axis voltage command;
   identifying mode controlling means (20) for fixing the rotational speed command as well as the first d-axis current command at a predetermined value for a predetermined time period in an identifying mode for identifying the inductance setting value during a vector control operation in which the first q-axis setting value is set to a value except zero; and
   inductance identifying means (23, 24, 25, 26) for computing an average value by integrating a difference between the second d-axis current command and the first d-axis current command, a correction quantity of the inductance setting value on the basis of the average value, and a corrected inductance setting value obtained by adding the correction quantity to the inductance setting value and using the corrected inductance setting value in computing in the voltage command computing means, wherein
   the identifying mode controlling means performs the identifying mode when the current detected by the current detection means reaches a plurality of different predetermined values.

2. The refrigerating apparatus as claimed in claim 1, wherein the identifying mode controlling means repeats performing the identifying mode a predetermined number of times.

3. The refrigerating apparatus as claimed in claim 1 or 2, wherein the identifying mode controlling means repeats performing the identifying mode at a predetermined interval.

4. The refrigerating apparatus as claimed in one of claims 1-3, wherein the identifying mode controlling means fixes the first d-axis current command at one of different predetermined setting values in accordance with the current detected by the current detecting means.

5. A controller for a permanent magnet synchronous motor to control the permanent magnet synchronous motor through a vector control at a rotational speed which is variably, comprising:

an inverter circuit (220) for generating and supplying an AC power from a DC power to the permanent synchronous motor;

a current detecting means (246) for detecting an input DC current or an output AC current of the inverter circuit;

a current detecting and computing means (243) for computing a d-axis current detection value and a q-axis current detection value from the current detected by the current detecting means;

a d-axis current command computing means (44) for generating a second d-axis current command by correcting a first d-axis current command on the basis of a deviation between a first d-axis current command and a d-axis current detection value;

a q-axis current command computing means (42) for generating a second q-axis current command by correcting a first q-axis current command on the basis of a deviation between a first q-axis current command and a q-axis current detection value;

voltage command computing means (45) for computing a d-axis voltage command and a q-axis voltage command on the basis of a motor constant setting value including an inductance setting value for the permanent magnet synchronous motor, a rotational speed command for the motor, the second d-axis current command, and the second q-axis current command;

inverter controlling means (15, 16) for controlling the inverter circuit on the basis of the d-axis voltage command and the q-axis voltage command;

identifying mode controlling means (20) for fixing the rotational speed command as well as the first d-axis current command at a predetermined value for a predetermined time period in an identifying mode for identifying the inductance setting value during a vector control operation in which the first q-axis setting value is set to a value except zero; and

inductance identifying means (23, 24, 25, 26) for computing an average value by integrating a difference between the second d-axis current command and the first d-axis current command, a correction quantity of the inductance setting value on the basis of the average value, and a corrected inductance setting value obtained by adding the correction quantity to the inductance setting value and using the corrected inductance setting value in computing in the voltage command computing means, wherein

the identifying mode controlling means performs the identifying mode when the current detected by the current detection means reaches a plurality of different predetermined values.

# FIG.1

100 AIR CONDITIONER

120 INDOOR EQUIPMENT

110 OUTDOOR EQUIPMENT

102

107 108 121

104 103

111

COMPRESSOR 101

109

112 PERMANENT MAGNET SYNCHRONOUS MOTOR

106

105

200 INVERTER

EP 2 448 110 A2

FIG.2

# FIG.3

EP 2 448 110 A2

FIG.4

# FIG.5

MOTOR CONSTANT IDENTIFYING UNIT 20

ACCUMULATING UNIT 21

$\Delta L^*\_all$

STORING UNIT 24

26

$L^*$ → TO 19

$L^*\_0$ 25

FROM 243 — Ish → IDENTIFYING MODE CONTROL UNIT 21

TO 10 AND 13 ← (IDENTIFYING MODE)

23

22

$r^*, Ke^*$ → TO 19

46

43 — d-AXIS CURRENT COMMAND COMPUTING UNIT 44 — Idc**

FROM 13 — Idc*

45

VOLTAGE COMMAND COMPUTING UNIT 45 — Vdc*

Vqc* → TO 15

41 — q-AXIS CURRENT COMMAND COMPUTING UNIT 42 — Iqc**

FORM 12 — Iqc*

$\omega^*$

Iqc | Idc
FROM 20

14 VECTOR CONTROL COMPUTING UNIT

FROM 10

EP 2 448 110 A2

## FIG.6

# FIG.7

## FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007049843 A
- US 20070035269 A

- US 200749843 B